(19) Europäisches Patentamt
European Patent Office
Office européen des brevets

(11) **EP 3 144 286 A1**

(12) **EUROPEAN PATENT APPLICATION**
published in accordance with Art. 153(4) EPC

(43) Date of publication:
**22.03.2017 Bulletin 2017/12**

(21) Application number: **15792465.5**

(22) Date of filing: **15.04.2015**

(51) Int Cl.:
**C03C 27/12** (2006.01)    **B60J 1/00** (2006.01)

(86) International application number:
**PCT/JP2015/061624**

(87) International publication number:
**WO 2015/174196 (19.11.2015 Gazette 2015/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **15.05.2014 JP 2014101348**

(71) Applicants:
• **Asahi Glass Company, Limited**
  **Tokyo 100-8405 (JP)**
• **Sekisui Chemical Co., Ltd.**
  **Osaka-shi, Osaka 530-8565 (JP)**

(72) Inventors:
• **NAKAMURA, Atsushi**
  **Tokyo 100-8405 (JP)**
• **HISAEDA, Katsumi**
  **Tokyo 100-8405 (JP)**
• **II, Daizou**
  **Kouka-shi**
  **Shiga 528-8585 (JP)**
• **TSUNODA, Ryuta**
  **Kouka-shi**
  **Shiga 528-8585 (JP)**

(74) Representative: **Müller-Boré & Partner**
  **Patentanwälte PartG mbB**
  **Friedenheimer Brücke 21**
  **80639 München (DE)**

(54) **LAMINATED GLASS INTERLAYER AND LAMINATED GLASS**

(57)    An interlayer for a laminated glass includes a thermoplastic resin, ITO particles, and a phthalocyanine-based compound including at least one of a phthalocyanine compound and a naphthalocyanine compound. When A indicates an amount (parts by mass) of the ITO particles in 100 parts by mass of the thermoplastic resin, and B indicates an amount (parts by mass) of the phthalocyanine-based compound in 100 parts by mass of the thermoplastic resin, the amount A satisfies

$$0.15 \text{ (parts by mass)} \leqq A \leqq 0.3 \text{ (parts by mass)} \ldots \text{formula (1)},$$

and
the amount B satisfies

$$-0.025A + 0.012 \text{ (parts by mass)} \leqq B \leqq -0.027A + 0.032 \text{ (parts by mass)} \ldots \text{formula (2)}.$$

EP 3 144 286 A1

# FIG.2

**Description**

TECHNICAL FIELD

The present invention relates to laminated glass used, for example, for a front windshield and a rear windshield of a vehicle.

BACKGROUND ART

Laminated glass is less likely to break into pieces even if it is damaged by an external impact and is excellent in safety. For this reason, laminated glass is widely used for, for example, automobiles and buildings.
Laminated glass generally includes a first glass substrate, a second glass substrate, and an interlayer disposed between the first and second glass substrates. The interlayer is normally made of a thermoplastic resin.
Patent Document 1 proposes an interlayer made of a thermoplastic resin to which heat-insulating particles such as indium tin oxide (ITO) particles and a phthalocyanine compound are added. It has been reported that the heat-insulating property and the visible-light transmittance of laminated glass can be improved by using such an interlayer.

[RELATED-ART DOCUMENT]

[Patent Document]

[Patent Document 1] WO 2011/024787

DISCLOSURE OF INVENTION

PROBLEMS TO BE SOLVED BY THE INVENTION

However, according to the experience of the inventors, when the interlayer of Patent Document 1 is used for laminated glass for a vehicle such as an automobile, the operability of sensors provided in the vehicle is often reduced. Also, when the interlayer of Patent Document 1 is used for laminated glass for a vehicle, an uncomfortable scorching sensation (scorching heat) is often felt on the skin.
For the above reasons, particularly in the field of laminated glass for vehicles, it is expected that the demand increases for laminated glass that enables sensors to properly operate and can prevent a passenger from feeling a scorching sensation on the skin.
The present invention is made in consideration of the above problems. One object of the present invention is to provide laminated glass that can significantly improve sensor operability and reduce a scorching sensation on the skin while having a high visible-light transmittance and a high heat-insulating property. Another object of the present invention is to provide an interlayer for such laminated glass.

MEANS FOR SOLVING THE PROBLEMS

The present invention provides an interlayer for a laminated glass. The interlayer includes a thermoplastic resin, ITO particles, and a phthalocyanine-based compound including at least one of a phthalocyanine compound and a naphthalocyanine compound. When A indicates an amount (parts by mass) of the ITO particles in 100 parts by mass of the thermoplastic resin, and B indicates an amount (parts by mass) of the phthalocyanine-based compound in 100 parts by mass of the thermoplastic resin,
the amount A satisfies

$$0.15 \text{ (parts by mass)} \leqq A \leqq 0.3 \text{ (parts by mass)} \ldots \text{ formula (1)},$$

and
the amount B satisfies

$$-0.025A + 0.012 \text{ (parts by mass)} \leqq B \leqq -0.027A + 0.032 \text{ (parts by mass)} \ldots \text{ formula (2)}.$$

ADVANTAGEOUS EFFECT OF THE INVENTION

The present invention makes it possible to provide laminated glass that can significantly improve sensor operability and reduce a scorching sensation on the skin while having a high visible-light transmittance and a high heat-insulating property. The present invention also makes it possible to provide an interlayer for such laminated glass.

BRIEF DESCRIPTION OF THE DRAWINGS

FIG. 1 is a schematic cross-sectional view of laminated glass according to an embodiment of the present invention;
FIG. 2 is a graph illustrating relationships between an amount A (horizontal axis) of ITO particles and an amount B (vertical axis) of a phthalocyanine compound included in an interlayer, and characteristics of laminated glass;
FIG. 3 is a graph illustrating spectral characteristics of laminated glass of Example 1 in comparison with spectral characteristics of existing laminated glass; and
FIG. 4 is a graph that has a horizontal axis indicating an amount A (parts by mass) of ITO particles and a vertical axis indicating an amount B (parts by mass) of a phthalocyanine compound, and on which points (A, B) corresponding to respective examples are plotted.

DESCRIPTION OF EMBODIMENTS

Embodiments of the present invention are described below with reference to the accompanying drawings.

«LAMINATED GLASS ACCORDING TO EMBODIMENT OF PRESENT INVENTION»

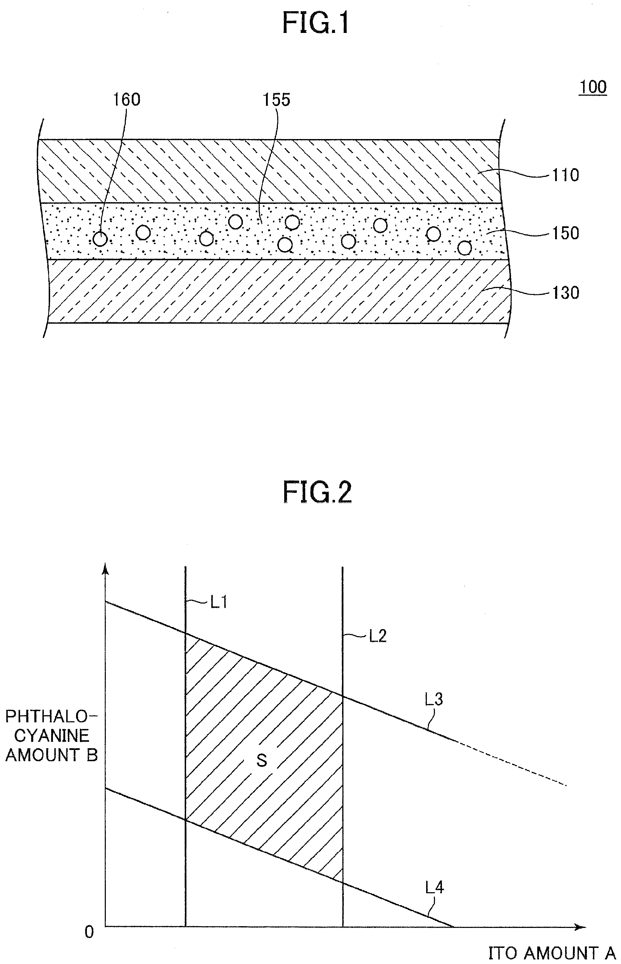

First, laminated glass according to an embodiment of the present invention is described with reference to FIG. 1.
FIG. 1 is a schematic cross-sectional view of laminated glass according to an embodiment of the present invention.
As illustrated by FIG. 1, laminated glass 100 includes a first glass substrate 110, a second glass substrate 130, and an interlayer 150 disposed between the first glass substrate 110 and the second glass substrate 130.
The first glass substrate 110 (and the second glass substrate 130, the same applies to the following descriptions) may be made of any type of glass. For example, the first glass substrate 110 may be made of clear glass, heat-absorbing plate glass, heat-reflecting plate glass, polished plate glass, figured glass, wired glass, lined glass, or green glass.
The thickness of the first glass substrate 110 is, for example, between 1 mm and 5 mm, and is preferably less than or equal to 3 mm.
The interlayer 150 includes a thermoplastic resin 155 that includes a phthalocyanine-based compound. The interlayer 150 also includes ITO particles 160 dispersed in the thermoplastic resin 155.
In the present application, "phthalocyanine-based compound" indicates a compound that includes at least one of a phthalocyanine compound and a naphthalocyanine compound.
In the interlayer 150 of the laminated glass 100, an amount A (parts by mass) of ITO particles 160 in 100 parts by mass of thermoplastic resin is set to satisfy formula (1) below.

$$0.15 \text{ (parts by mass)} \leqq A \leqq 0.3 \text{ (parts by mass)} \ldots \text{ Formula (1)}$$

An amount B (parts by mass) of the phthalocyanine-based compound in 100 parts by mass of thermoplastic resin is set to satisfy formula (2) below.

$$-0.025A + 0.012 \text{ (parts by mass)} \leqq B \leqq -0.027A + 0.032 \text{ (parts by mass)} \ldots \text{ Formula (2)}$$

As described above, when the laminated glass of Patent Document 1 is used, for example, for the front windshield and the rear windshield of a vehicle, the operability of sensors provided in the vehicle is often reduced. Also, when the laminated glass of Patent Document 1 is used for a vehicle, an uncomfortable scorching sensation is often felt on the skin of a passenger.

To solve the above problems of existing laminated glass, the inventors of the present invention have conducted research on the influence of ITO particles and a phthalocyanine-based compound included in an interlayer on the characteristics of the interlayer and laminated glass. As a result, the inventors have found out that all of the visible-light transmittance, the heat-insulating property, the scorching sensation, and the sensor operability of laminated glass are related to the amount of ITO particles and the amount of a phthalocyanine-based compound included in the interlayer.

This indicates that the characteristics of laminated glass including the visible-light transmittance, the heat-insulating property, the scorching sensation, and the sensor operability can be improved by controlling the amount of ITO particles and the amount of a phthalocyanine-based compound included in the interlayer within appropriate ranges.

Below, relationships found out by the inventors between the amounts of ITO particles and a phthalocyanine-based compound and the characteristics of laminated glass are described with reference to FIG. 2.

FIG. 2 is a graph used to describe the influence of an amount A (horizontal axis) of ITO particles and an amount B (vertical axis) of a phthalocyanine-based compound included in an interlayer on the characteristics of laminated glass.

In FIG. 2, four lines L1 through L4 indicate hypothetical boundaries of the characteristics assumed by the inventors.

The line L1 indicates a hypothetical boundary of the scorching sensation on the skin. That is, in FIG. 2, the scorching sensation is almost not felt in the area to the right of the line L1, but the scorching sensation becomes nonnegligible and uncomfortable in the area to the left of the line L1.

The line L2 indicates a hypothetical boundary of the sensor operability. That is, almost no influence on the sensor operability is observed in the area to the left of the line L2, but the sensor operability is reduced or sensors become inoperable in the area to the right of the line L2.

The line L3 indicates a hypothetical boundary of the visible-light transmittance. That is, the visible-light transmittance of laminated glass is high in the area below the line L3, but the visible-light transmittance is reduced and the laminated glass becomes not suitable for a vehicle in the area above the line L3.

The line L4 indicates a hypothetical boundary of the heat-insulating property. That is, the heat-insulating property of laminated glass is high in the area above the line L4, but the heat-insulating property is reduced and the laminated glass becomes unable to sufficiently shield infrared radiation in the area below the line L4.

The above findings indicate that there is an area where the four characteristics of laminated glass including the visible-light transmittance, the heat-insulating property, the scorching sensation, and the sensor operability are all satisfactory. That is, in FIG. 2, it is assumed that all of the four characteristics of laminated glass become satisfactory in an area S surrounded by the four lines L1 through L4.

Based on the above consideration, to determine the area S of FIG. 2, the inventors prepared interlayers including different amounts A of ITO particles and different amounts B of phthalocyanine-based compound, and evaluated the characteristics of the interlayers.

As a result, the inventors have found out that the four characteristics become satisfactory when the amount A of ITO particles and the amount B of phthalocyanine-based compound are set to satisfy the formulas (1) and (2) described above. That is, it has been determined that an area satisfying the formulas (1) and (2) corresponds to the area S in FIG. 2.

Thus, all of the visible-light transmittance, the heat-insulating property, the scorching sensation, and the sensor operability of the interlayer 150 of the laminated glass 100 can be made satisfactory by setting the amount A of the ITO particles 160 and the amount B of the phthalocyanine-based compound in the interlayer 150 to satisfy the formulas (1) and (2).

Also, by using the interlayer 150 with such a composition, it is possible to reduce the scorching sensation and improve the sensor operability while maintaining the visible-light transmittance and the heat-insulating property of the laminated glass 100 at satisfactory levels.

<<INTERLAYER ACCORDING TO EMBODIMENT OF PRESENT INVENTION>>

Next, the configuration of an interlayer according to an embodiment of the present invention is described in more detail.

As described above, the interlayer includes a thermoplastic resin, a phthalocyanine-based compound, and ITO particles. The interlayer may also include a plasticizer.

<THERMOPLASTIC RESIN>

A known commercial thermoplastic resin may be used. Also, either one type of thermoplastic resin or a combination of two or more types of thermoplastic resins may be used.

Examples of thermoplastic resins include polyvinyl acetal resin, ethylene-vinyl acetate copolymer resin, ethylene-acrylic copolymer resin, polyurethane resin, and polyvinyl alcohol resin. However, other types of thermoplastic resins may also be used.

The thermoplastic resin is preferably a polyvinyl acetal resin such as polyvinyl butyral. Using a polyvinyl acetal resin in combination with a plasticizer makes it possible to increase the adhesion of the interlayer to the glass substrates.

A polyvinyl acetal resin can be produced by, for example, acetalizing polyvinyl alcohol with aldehyde. Polyvinyl alcohol can be obtained by, for example, saponifying polyvinyl acetate. The degree of saponification of polyvinyl alcohol is generally within a range between 80 and 99.8 mol%.

<PLASTICIZER>

The interlayer may include a plasticizer.

Any known plasticizer may be used. Also, either one type of plasticizer or a combination of two or more types of plasticizers may be used.

Examples of plasticizers include organic ester plasticizers such as monobasic organic acid ester and polybasic organic acid ester, and phosphoric acid plasticizers such as an organic phosphoric acid plasticizer and an organic phosphorous acid plasticizer. Among them, organic ester plasticizers are particularly preferable. The plasticizer is preferably a liquid plasticizer.

<ITO PARTICLES>

The average particle diameter of the ITO particles is, for example, greater than or equal to 10 nm, and is preferably greater than or equal to 20 nm. Also, the average particle diameter of the ITO particles is, for example, less than or equal to 80 nm, and is preferably greater than or equal to 50 nm. Setting the average particle diameter of the ITO particles at a value less than or equal to 80 nm makes it possible to improve the dispersibility of the ITO particles.

Here, "average particle diameter" indicates a volume average particle diameter. The average particle diameter can be measured by using, for example, a grain-size distribution measuring device.

As described above, the amount A (parts by mass) of ITO particles in 100 parts by mass of thermoplastic resin is set to satisfy formula (1) below.

$$0.15 \text{ (parts by mass)} \leq A \leq 0.3 \text{ (parts by mass)} \ldots \text{ Formula (1)}$$

Setting the amount A to satisfy "0.15 (parts by mass) $\leq$ A" makes it possible to reduce the scorching sensation on the skin that is caused by light entering via laminated glass. Also, setting the amount A to satisfy "A $\leq$ 0.3 (parts by mass)" makes it possible to improve the operability of sensors disposed in laminated glass.

<PHTHALOCYANINE-BASED COMPOUND>

A known phthalocyanine compound may be used. For example, phthalocyanine and a phthalocyanine derivative may be used as the phthalocyanine compound. Also, a combination of two or more types of phthalocyanine compounds may be used.

Also, a known naphthalocyanine compound may be used. For example, naphthalocyanine and a naphthalocyanine derivative may be used as the naphthalocyanine compound. Also, a combination of two or more types of naphthalocyanine compounds may be used.

Further, a combination of the phthalocyanine compound and the naphthalocyanine compound may be used. Each of the phthalocyanine compound and the phthalocyanine derivative preferably has a phthalocyanine skeleton. Each of the naphthalocyanine compound and the naphthalocyanine derivative preferably has a naphthalocyanine skeleton.

To effectively improve the heat-insulating property and to maintain the visible-light transmittance at a higher level for a long period of time, the phthalocyanine compound and the naphthalocyanine compound preferably include vanadium atoms or copper atoms, more preferably include vanadium atoms, more preferably include copper atoms, and particularly preferably have a structure including copper atoms.

When A indicates the amount (parts by mass) of the ITO particles and B indicates the amount (parts by mass) of the phthalocyanine-based compound in 100 parts by mass of thermoplastic resin, the amount B is set to satisfy formula (2) below.

$$-0.025A + 0.012 \text{ (parts by mass)} \leqq B \leqq -0.027A + 0.032 \text{ (parts by mass)} ... \text{Formula (2)}$$

Setting the amount B to satisfy "-0.025A + 0.012 (parts by mass) ≦ B" makes it possible to improve the heat-insulating property of laminated glass. Also, setting the amount B to satisfy "B ≦ -0.027A + 0.032 (parts by mass)" makes it possible to suppress the decrease in the visible-light transmittance of laminated glass.

<OTHER COMPONENTS OF INTERLAYER>

The interlayer of the embodiment of the present embodiment may include, as necessary, additives such as an ultraviolet absorber, an antioxidant, a light stabilizer, a fire retardant, an antistatic agent, a pigment, a dye, an adhesion adjuster, an anti-moisture agent, a fluorescent bleach, and an infrared absorber. The interlayer preferably includes an antioxidant. Also, the interlayer preferably includes an ultraviolet absorber.

<<LAMINATED GLASS>>

The laminated glass 100 of FIG. 1 may be used, for example, for a front windshield and a rear windshield of an automobile. Various types of sensors (e.g., a rain sensor and an anti-collision sensor) may be disposed in the laminated glass 100.

The laminated glass 100 of FIG. 1 may be manufactured by any appropriate method. For example, the laminated glass 100 may be manufactured according to a method as described below.

The interlayer 150 is placed between the first glass substrate 110 and the second glass substrate 130, and air remaining at the interfaces between the components is removed by, for example, causing the components to pass through pressing rollers or putting the components in a rubber bag and depressurizing the rubber bag.

Next, the components are pre-bonded at about 70 to 110 °C to obtain a laminated structure.

Then, the obtained laminated structure is placed in an autoclave and is pressure-bonded at a temperature of about 120 to 150 °C and a pressure of 1 MPa to 1.5 MPa.

Through the above process, the laminated glass 100 can be obtained.

«EXAMPLES»

Next, examples of the present invention are described. However, the present invention is not limited to those examples.

<EXAMPLE 1>

Laminated glass was produced according a method described below.

(1) Preparation of dispersion liquid

First, 40 parts by mass of triethylene glycol di-2-ethylhexanoate (3GO), 0.2 parts by mass of ITO particles (Mitsubishi Materials Corporation), and 0.012 parts by mass of a phthalocyanine compound (copper phthalocyanine compound, FUJIFILM Corporation "FF IRSORB203") were mixed. A phosphoric acid ester compound used as a disperser was added to and mixed with the mixture by a horizontal microbead mill to obtain a mixture liquid.

Then, 0.1 parts by mass of acetylacetone was added to the mixture liquid while agitating the mixture liquid to prepare a dispersion liquid. The content of the phosphoric acid ester compound was adjusted to become one tenth of the content of heat-insulating particles.

(2) Preparation of interlayer

The whole amount of the dispersion liquid obtained at (1) was added to 100 parts by mass of polyvinyl butyral resin (butyralization degree 68.5 mol%, hydroxyl amount 30.5 mol%), and the resulting mixture was melt-kneaded with a mixing roll and then extruded with an extruder to obtain an interlayer with a thickness of 0.76 mm.

(3) Production of laminated glass

Two clear glass plates with a length of 30 cm, a width of 30 cm, and a thickness of 2.0 mm were prepared. The interlayer obtained at (2) was placed between the clear glass plates to obtain a laminated structure.

Next, the laminated structure was placed in a rubber bag and degassed at a vacuum pressure of 2.6 kPa for 20 minutes, placed in an oven while being degassed, and vacuum-pressed at 90 °C for 30 minutes for preliminary pressure-bonding. The preliminarily pressure-bonded laminated structure was pressure-bonded for 20 minutes in an autoclave at a temperature of 135 °C and a pressure of 1.2 MPa to obtain laminated glass.

<EXAMPLES 2-4>

Laminated glass was produced according a method similar to the method of Example 1.
In Examples 2 through 4, however, the amount of the ITO particles and the amount of the phthalocyanine compound included in the dispersion liquid prepared at (1) were changed from those in Example 1.
Accordingly, the amounts of the ITO particles and the phthalocyanine compound in the interlayers prepared in Examples 2 through 4 are different from those in the interlayer prepared in Example 1.

<COMPARATIVE EXAMPLES 1-20>

Laminated glass was produced according a method similar to the method of Example 1.
In Comparative Examples 1 through 20, however, the amount of the ITO particles and the amount of the phthalocyanine compound included in the dispersion liquid prepared at (1) were changed from those in Example 1.
Accordingly, the amounts of the ITO particles and the phthalocyanine compound in the interlayers prepared in Comparative Examples 1 through 20 are different from those in the interlayer prepared in Example 1.
Table 1 below includes the amounts (parts by mass) of the ITO particles and the amounts (parts by mass) of the phthalocyanine compound in the interlayers prepared in the respective examples.

[Table 1]

| | ITO AMOUNT (PARTS BY MASS) | PHTHALO-CYANINE MOUNT (PARTS BY MASS) | VISIBLE-LIGHT TRANSMITTANCE INDICATOR Tv (%) | | HEAT-INSULATING PROPERTY INDICATOR Tts (%) | | SENSOR OPERABILITY INDICATOR T850 (%) | | SCORCHING SENSATION INDICATOR T1550 (%) | | TOTAL EVALUATION | NUMBER PLOTTED ON FIG. 2 |
|---|---|---|---|---|---|---|---|---|---|---|---|---|
| | | | VALUE | EVALUATION | VALUE | EVALUATION | VALUE | EVALUATION | VALUE | EVALUATION | | |
| EXAMPLE 1 | 0.2 | 0.012 | 84 | ○ | 68 | ○ | 75 | ○ | 14 | ○ | ○ | 1 |
| EXAMPLE 2 | 0.25 | 0.02 | 83 | ○ | 69 | ○ | 74 | ○ | 9 | ○ | ○ | 2 |
| EXAMPLE 3 | 0.25 | 0.01 | 85 | ○ | 70 | ○ | 74 | ○ | 9 | ○ | ○ | 3 |
| EXAMPLE 4 | 0.2 | 0.02 | 83 | ○ | 69 | ○ | 75 | ○ | 14 | ○ | ○ | 4 |
| COMPARATIVE EXAMPLE 1 | 0.1 | 0.006 | 86 | ○ | 73 | × | 77 | ○ | 35 | × | × | 5 |
| COMPARATIVE EXAMPLE 2 | 0.5 | 0.02 | 80 | ○ | 61 | ○ | 70 | × | 1 | ○ | × | 6 |
| COMPARATIVE EXAMPLE 3 | 0.1 | 0.005 | 87 | ○ | 73 | × | 77 | ○ | 35 | × | × | 7 |
| COMPARATIVE EXAMPLE 4 | 1 | 0 | 83 | ○ | 68 | ○ | 64 | × | 0 | ○ | × | 8 |
| COMPARATIVE EXAMPLE 5 | 0 | 0.03 | 82 | ○ | 69 | ○ | 78 | ○ | 83 | × | × | 9 |
| COMPARATIVE EXAMPLE 6 | 0.7 | 0.008 | 83 | ○ | 68 | ○ | 68 | × | 0 | ○ | × | 10 |
| COMPARATIVE EXAMPLE 7 | 0.35 | 0.002 | 86 | ○ | 72 | × | 73 | × | 4 | ○ | × | 11 |

(continued)

| | ITO AMOUNT (PARTS BY MASS) | PHTHALO-CYANINE MOUNT (PARTS BY MASS) | VISIBLE-LIGHT TRANSMITTANCE INDICATOR Tv (%) | | HEAT-INSULATING PROPERTY INDICATOR Tts (%) | | SENSOR OPERABILITY INDICATOR T850 (%) | | SCORCHING SENSATION INDICATOR T1550 (%) | | TOTAL EVALUATION | NUMBER PLOTTED ON FIG. 2 |
|---|---|---|---|---|---|---|---|---|---|---|---|---|
| | | | VALUE | EVALUATION | VALUE | EVALUATION | VALUE | EVALUATION | VALUE | EVALUATION | | |
| COMPARATIVE EXAMPLE 8 | 0.35 | 0.015 | 83 | ○ | 69 | ○ | 73 | × | 4 | ○ | × | 12 |
| COMPARATIVE EXAMPLE 9 | 0.25 | 0.045 | 77 | × | 64 | ○ | 74 | ○ | 9 | ○ | × | 13 |
| COMPARATIVE EXAMPLE 10 | 0.35 | 0.035 | 79 | × | 65 | ○ | 73 | × | 4 | ○ | × | 14 |
| COMPARATIVE EXAMPLE 11 | 0.15 | 0.03 | 81 | ○ | 68 | ○ | 76 | ○ | 22 | × | × | 15 |
| COMPARATIVE EXAMPLE 12 | 0.1 | 0 | 88 | ○ | 77 | × | 77 | ○ | 35 | × | × | 16 |
| COMPARATIVE EXAMPLE 13 | 0.2 | 0 | 88 | ○ | 74 | × | 75 | ○ | 14 | ○ | × | 17 |
| COMPARATIVE EXAMPLE 14 | 0.5 | 0 | 86 | ○ | 70 | ○ | 70 | × | 1 | ○ | × | 18 |
| COMPARATIVE EXAMPLE 15 | 2.5 | 0 | 75 | × | 58 | ○ | 44 | × | 0 | ○ | × | 19 |
| COMPARATIVE EXAMPLE 16 | 0.2 | 0.1 | 66 | × | 54 | ○ | 75 | ○ | 14 | ○ | × | 20 |

| | ITO AMOUNT (PARTS BY MASS) | PHTHALO-CYANINE MOUNT (PARTS BY MASS) | VISIBLE-LIGHT TRANSMITTANCE INDICATOR Tv (%) | | HEAT-INSULATING PROPERTY INDICA-TOR Tts (%) | | SENSOR OPERABILI-TY INDICATOR T850 (%) | | SCORCHING SENSA-TION INDICATOR T1550 (%) | | TOTAL EVALU-ATION | NUMBER PLOTTED ON FIG. 2 |
|---|---|---|---|---|---|---|---|---|---|---|---|---|
| | | | VALUE | EVALUA-TION | VALUE | EVALUA-TION | VALUE | EVALU-ATION | VALUE | EVALUA-TION | | |
| COMPARA-TIVE EXAM-PLE 17 | 0.2 | 0.001 | 87 | ○ | 73 | × | 75 | ○ | 14 | ○ | × | 21 |
| COMPARA-TIVE EXAM-PLE 18 | 0.05 | 0.01 | 85 | ○ | 73 | × | 78 | ○ | 52 | × | × | 22 |
| COMPARA-TIVE EXAM-PLE 19 | 2.5 | 0.01 | 72 | × | 54 | ○ | 44 | × | 0 | ○ | × | 23 |
| COMPARA-TIVE EXAM-PLE 20 | 2.5 | 0.03 | 68 | × | 49 | ○ | 44 | × | ○ | ○ | × | 24 |

EP 3 144 286 A1

<EVALUATION>

The spectral characteristics of laminated glass produced in each of Examples 1 through 4 and Comparative Examples 1 through 20 were measured. Also, the visible-light transmittance, the heat-insulating property, the sensor operability, and the scorching sensation of laminated glass were evaluated based on the measurements.

The spectral characteristics of laminated glass were measured by using a spectrophotometer (U-4100, Hitachi High-Technologies Corporation).

For comparison, the spectral characteristics of existing laminated glass (Cool verre, ASAHI GLASS CO., LTD.) were also measured.

<VISIBLE-LIGHT TRANSMITTANCE>

The visible-light transmittance of laminated glass was evaluated using an indicator Tv (total visible light transmittance). The indicator Tv was calculated as a weighted average of transmittances at wavelengths between 380 through 780 nm in conformity with JIS R3212 (1998) and JIS Z8722.

<HEAT-INSULATING PROPERTY>

The heat-insulating property of laminated glass was evaluated using a heat-insulating property indicator Tts. The indicator Tts was calculated in conformity with ISO13837:2008.

<SENSOR OPERABILITY>

The sensor operability of laminated glass was evaluated using a sensor operability indicator T850. The indicator T850 was obtained based on the transmittance at a wavelength of 850 nm in the spectral characteristics.

The wavelength range around 850 nm corresponds to operating frequencies of many sensors. Accordingly, the sensor operability of laminated glass can be evaluated using the indicator T850.

<SCORCHING SENSATION>

The scorching sensation related to laminated glass was evaluated using a scorching sensation indicator T1550. The indicator T1550 was obtained based on the transmittance at a wavelength of 1550 nm in the spectral characteristics.

The wavelength range around 1550 nm corresponds to a wavelength at which heat is most prominently felt on the skin (at which absorption of light is high). Accordingly, the scorching sensation related to laminated glass can be evaluated using the indicator T1550.

<RESULTS>

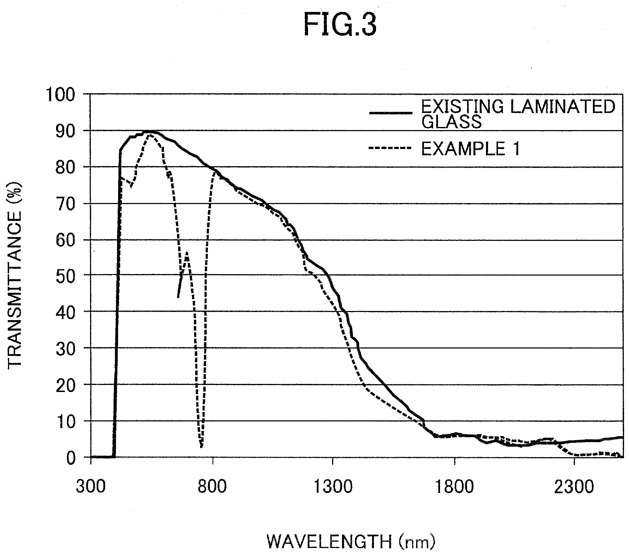

FIG. 3 illustrates the spectral characteristics of the laminated glass of Example 1. FIG. 3 also illustrates the spectral characteristics of existing laminated glass for comparison.

As indicated by FIG. 3, the transmittance of the laminated glass of Example 1 is significantly lower than the transmittance of the existing laminated glass in a wavelength range between about 600 nm and about 850 nm.

Characteristics of laminated glass of the respective examples are collectively shown in Table 1. In the "evaluation" column of each characteristic, "0" (good) and "X" (bad) are determined with reference to the measurement of the corresponding characteristic of the existing laminated glass.

Regarding the existing laminated glass, the visible-light transmittance indicator Tv is 88% (79%), the heat-insulating property indicator Tts is 74% (61%), the sensor operability indicator T850 is 75% (37%), and the scorching sensation indicator T1550 is 14% (9%). Values in parentheses are equivalent indicator values of green glass.

In a first evaluation method, when a characteristic of laminated glass is better than or equal to the corresponding characteristic of the existing laminated glass, the characteristic is evaluated as "O"; and when a characteristic of laminated glass is worse than the corresponding characteristic of the existing laminated glass, the characteristic is evaluated as "X". With this method, however, all the evaluation results of the existing laminated glass become "O", and the "total evaluation" result of the existing laminated glass also becomes "O". Also with this method, even when only one characteristic of laminated glass is slightly better than that of the existing laminated glass, the total evaluation result of the laminated glass becomes "O".

For the above reasons, in the present embodiment, while referring to the measurements of the characteristics of the existing laminated glass, more "severe" criteria are used to determine "0" or "X".

More specifically, each characteristic is evaluated as "0" when the corresponding one of $Tv \geqq 80\%$, $Tts \leqq 70\%$,

T850 ≧ 74%, and T1550 ≦ 14% is satisfied, and is otherwise evaluated as "X". Also, the total evaluation result is determined as "0" when the evaluation results of all the characteristics are "0".

As indicated by Table 1, the evaluation results of all of the four characteristics of the laminated glass of Examples 1 through 4 are good.

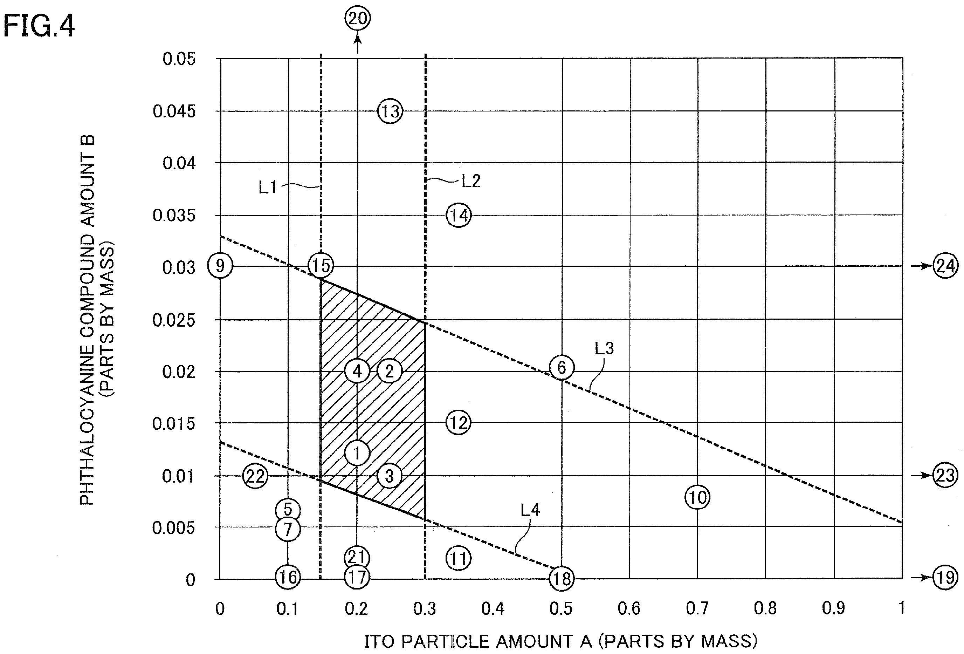

FIG. 4 is a graph that has a horizontal axis indicating an amount A (parts by mass) of ITO particles and a vertical axis indicating an amount B (parts by mass) of a phthalocyanine compound, and on which points (A, B) corresponding to the respective examples are plotted.

FIG. 4 also includes four lines. A line L1 indicates A = 0.15 (parts by mass), a line L2 indicates A = 0.3 (parts by mass), a line L3 indicates B = -0.025A + 0.012, and a line L4 indicates B = -0.027A 0.032.

As indicated by FIG. 4, the points (A, B) corresponding to the laminated glass of Examples 1 through 4, all of the four characteristics of which are evaluated as good, are in an area surrounded by the four lines.

Thus, it has been confirmed that laminated glass having excellent characteristics in all of the visible-light transmittance, the heat-insulating property, the sensor operability, and the scorching sensation can be obtained by setting the amounts A and B to satisfy formulas (1) and (2) below.

$$0.15 \text{ (parts by mass)} \leqq A \leqq 0.3 \text{ (parts by mass)} \ ... \text{ Formula (1)}$$

$$-0.025A + 0.012 \text{ (parts by mass)} \leqq B \leqq -0.027A + 0.032 \text{ (parts by mass)} \ ... \text{ Formula (2)}$$

INDUSTRIAL APPLICABILITY

The present invention may be applied to, for example, laminated glass for a vehicle or a building.

The present application is based on and claims the benefit of priority of Japanese Patent Application No. 2014-101348 filed on May 15, 2014, the entire contents of which are hereby incorporated herein by reference.

EXPLANATION OF REFERENCE NUMERALS

100    Laminated glass
110    First glass substrate
130    Second glass substrate
150    Interlayer
155    Thermoplastic resin
160    ITO particles

**Claims**

1. An interlayer for a laminated glass, the interlayer comprising:

   a thermoplastic resin;
   ITO particles; and
   a phthalocyanine-based compound including at least one of a phthalocyanine compound and a naphthalocyanine compound, wherein
   when A indicates an amount (parts by mass) of the ITO particles in 100 parts by mass of the thermoplastic resin, and B indicates an amount (parts by mass) of the phthalocyanine-based compound in 100 parts by mass of the thermoplastic resin,
   the amount A satisfies

$$0.15 \text{ (parts by mass)} \leqq A \leqq 0.3 \text{ (parts by mass)} \ ... \text{ formula (1),}$$

and
the amount B satisfies

$$-0.025A + 0.012 \text{ (parts by mass)} \leqq B \leqq -0.027A + 0.032 \text{ (parts by mass)} \dots \text{ formula (2).}$$

2. A laminated glass, comprising:

first and second glass substrates; and
an interlayer disposed between the first and second glass substrates,
wherein the interlayer is the interlayer for the laminated glass of claim 1.

3. The laminated glass as claimed in claim 2, wherein the laminated glass is for an automobile.

# FIG.1

# FIG.2

# FIG.3

FIG.4

## INTERNATIONAL SEARCH REPORT

| International application No. |
| --- |
| PCT/JP2015/061624 |

A. CLASSIFICATION OF SUBJECT MATTER
*C03C27/12*(2006.01)i, *B60J1/00*(2006.01)i

According to International Patent Classification (IPC) or to both national classification and IPC

B. FIELDS SEARCHED

Minimum documentation searched (classification system followed by classification symbols)
C03C27/12, B60J1/00, B32B17/10, E06B3/66, C08K3/20, C08K5/3412

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2011/040444 A1 (Sekisui Chemical Co., Ltd.), 07 April 2011 (07.04.2011), paragraphs [0001], [0007], [0025] to [0070], [0077] to [0081], [0084], [0088] to [0092]; table 1; fig. 1 & JP 5685084 B          & US 2012/0171479 A1 & EP 2484649 A1          & CN 102574740 A & CN 103922614 A | 1-3 |
| X | JP 2012-206877 A (Sekisui Chemical Co., Ltd.), 25 October 2012 (25.10.2012), paragraphs [0001], [0007], [0037] to [0080], [0088] to [0090], [0099], [0102] to [0106]; table 1; fig. 1 (Family: none) | 1-3 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 July 2015 (10.07.15) | 21 July 2015 (21.07.15) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (July 2009)

**INTERNATIONAL SEARCH REPORT**

| International application No. |
| --- |
| PCT/JP2015/061624 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2011/024787 A1 (Sekisui Chemical Co., Ltd.), 03 March 2011 (03.03.2011), paragraphs [0001], [0027] to [0056], [0058] to [0061], [0064], [0068] to [0071]; tables 1 to 2, fig. 1<br>& JP 4949519 B          & JP 2012-126639 A<br>& US 2012/0164457 A1     & EP 2471761 A1<br>& EP 2692708 A1          & MX 2012001806 A<br>& CN 102625785 A         & RU 2012111202 A<br>& KR 10-2012-0065332 A   & CN 103641337 A<br>& CN 103693864 A | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011024787 A
- JP 2014101348 A